# EUROPÄISCHE PATENTSCHRIFT

(11) **EP 1 518 099 B1**
(45) Veröffentlichungstag und Bekanntmachung des Hinweises auf die Patenterteilung: **10.05.2006**
(21) Anmeldenummer: 03760564.9
(22) Anmeldetag: 18.06.2003
(51) Int. Cl.: G01L 19/14

(54) **HOCHDRUCK-SENSOR-GEHAEUSE MIT VERBINDUNGSTEIL (EMV-ABSCHIRMUNG)**
HIGH-PRESSURE SENSOR HOUSING COMPRISING A CONNECTION ELEMENT (EMI-SHIELD)
BOITIER DE CAPTEUR HAUTE PRESSION COMPRENANT UN ELEMENT DE LIAISON (BLINDAGE EMI)

(30) Priorität: 22.06.2002 DE 10227989; 04.04.2003 DE 10315405
(43) Veröffentlichungstag der Anmeldung: 30.03.2005
(73) Patentinhaber: ROBERT BOSCH GMBH, 70442 Stuttgart (DE)
(72) Erfinder: MAST, Martin, 70839 Gerlingen (DE); ROGGE, Berthold, 70197 Stuttgart (DE); HABIBI, Masoud, 71701 Schwieberdingen (DE); KAISER, Ralf, 71549 Unterbruenden (DE); MOELKNER, Thomas, 70563 Stuttgart (DE); GEBERS, Joerg, 71282 Hemmingen (DE); KASCHUBE, Carsten, 72622 Nuertingen (DE); BAUMANN, Lothar, 73249 Wernau (DE); DIDRA, Hans-Peter, 72127 Kusterdingen-Jettenburg (DE); FREHOFF, Roger, 70839 Gerlingen (DE); FISSLER, Markus, 71732 Tamm (DE)
(86) Internationale Anmeldenummer: PCT/DE2003/002042
(87) Internationale Veröffentlichungsnummer: WO 2004/001362

(56) Entgegenhaltungen:
- EP-A- 0 797 085
- EP-A- 1 016 573
- EP-A- 1 098 183
- EP-A- 1 211 496
- DE-A- 3 937 573
- DE-A- 10 014 992
- US-A- 4 939 497
- US-A- 5 349 865
- US-A- 5 993 223

## Beschreibung

### Stand der Technik

Die Erfindung betrifft eine Vorrichtung zur Druckmessung mit den Merkmalen des Oberbegriffs des unabhängigen Anspruchs 1.

Eine derartige Vorrichtung zur Druckmessung, die beispielsweise aus der DE 100 14 992 A1 bekannt ist, weist ein erstes Sensorgehäuseteil auf, dessen Umfangswand als Sechskant ausgebildet ist, und ein mit einem elektrischen Anschluss versehenes zweites Sensorgehäuseteil, das direkt an dem ersten Sensorgehäuseteil befestigt ist. Hierzu ist in das erste Sensorgehäuseteil eine Nut eingefräst, in welche die Stirnseite einer umlaufenden Gehäusewand des zweiten Sensorgehäuseteils eingreift. Zur Befestigung des ersten Sensorgehäuseteils an dem zweiten Sensorgehäuseteil ist das erste Sensorgehäuseteil im Bereich der Nut über die umlaufende Wand des zweiten Sensorgehäuseteils gebördelt.

Ein Dunksensor mit einem Verbindungsteil zur Verbindung zwein Gehäuseteile ist aus der EP 1 211 496 A bekannt.

### Vorteile der Erfindung

Die erfindungsgemäße Vorrichtung zur Druckmessung mit den Merkmalen des Anspruchs 1 ist gegenüber dem bekannten Stand der Technik preiswerter und einfacher herstellbar. Vorteilhaft kann das erste Sensorgehäuseteil als plattenförmiges Basisteil in sehr einfacher Weise gefertigt werden, ohne dass eine Nut oder Bördelkante an dem ersten Sensorgehäuseteil vorgesehen werden muss. Zur Verbindung des ersten Sensorgehäuseteils und des zweiten Sensorgehäuseteils ist ein zwischen den beiden Sensorgehäuseteilen angeordnetes zusätzliches Verbindungsteil vorgesehen, dass preisgünstig beispielsweise aus einem Metallblech oder dünnwandigen Metallrohr hergestellt werden kann. Durch das Verbindungsteil wird der Fertigungsaufwand zur Herstellung des ersten Sensorgehäuseteils stark reduziert. Da in das erste Sensorgehäuseteil keine Nut eingebracht wird und keine Bördelkante daran angeordnet ist, kann dieses dünner ausgebildet werden, wodurch Materialkosten eingespart werden. Insbesondere kann das erste Sensorgehäuseteil als einfaches Stanzteil gefertigt werden.

Vorteilhafte Ausführungsbeispiele und Weiterentwicklungen der Erfindung werden durch die in den abhängigen Ansprüchen angegebenen Merkmale ermöglicht.

Besonders preiswert kann das Verbindungsteil als einfaches Stanzbiegeteil oder aus einem dünnwandigen Rohr gefertigt werden.

Zur Befestigung des ersten Sensorgehäuseteils an dem zweiten Sensorgehäuseteil ist vorgesehen, dass ein umlaufender, vorzugsweise kreisringförmiger Abschnitt des Verbindungsteils mit einer Fläche des ersten Sensorgehäuseteils verschweißt wird.

Das Verbindungsteil kann in einem Ausführungsbeispiel mittels einer Bördelung an dem zweiten Sensorgehäuseteil festgelegt werden. Zusätzlich ist am Verbindungsteil eine umlaufende Nut ausgebildet, in welche die Stirnseite einer umlaufenden Gehäusewand des zweiten Sensorgehäuseteils eingreift.

Da gemäß dem Erfindung das zweite Sensorgehäuseteil aus Kunststoff gefertigt ist, ist das Verbindungsteil auch mit einem Abschnitt in den Kunststoff des zweiten Sensorgehäuseteils eingebettet und steht mit einem zur Verbindung mit dem ersten Sensorgehäuseteil vorgesehenen weiteren Abschnitt davon ab. So ist das zweite Sensorgehäuseteil als preiswertes Spritzgussteil gefertigt , wobei das Verbindungsteil als Einlegeteil in das Spritzgusswerkzeug eingesetzt wird.

### Zeichnungen

Ausführungsbeispiele der Erfindung sind in den Zeichnungen dargestellt und werden in der nachfolgenden Beschreibung erläutert. Es zeigt
Fig. 1 einen Querschnitt durch ein Drucksensorgehäuse,
Fig. 2 einen Schnitt durch Fig. 1 entlang der Linie II-II,
Fig. 3 einen Querschnitt durch ein Drucksensorgehäuse nach einem zweiten Ausführungsbeispiel der Erfindung.
Fig. 4 und Fig. 5 Querschnitte durch ein Durcksensorgehäuse für ein weiteres Ausführungsbeispiel der Erfindung.

### Beschreibung der Ausführungsbeispiele

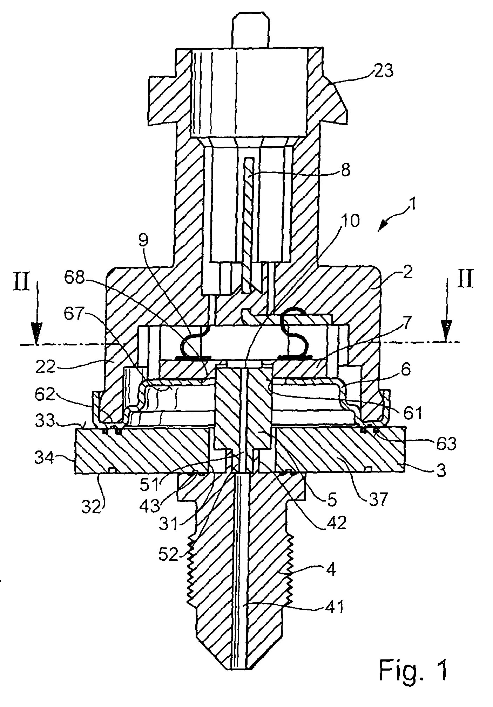

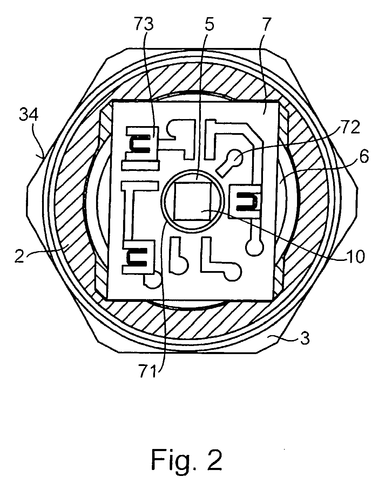

Fig. 1 und Fig. 2 zeigen ein Drucksensorgehäuse als Beispiel, das nicht eine Ausführungsform der Erfindung darstellt, sondern zu deren bessenem Verständnis dient. Ein Halbleiter-Druckaufnehmer 10 ist auf ein sockelförmiges Trägerteil 5 aufgelötet. Der Druckaufnehmer 10 ist vorzugsweise als Siliziumchip ausgebildet und mit Sensorelementen und einer Sensormembran versehen. Zusätzlich zu den Sensorelementen kann noch eine nicht dargestellte Auswerteschaltung auf dem Druckaufnehmer 10 angeordnet sein. Um thermische Spannungen zwischen Halbleiter-Druckaufnehmer 10 und Trägerteil 5 zu reduzieren, ist das Trägerteil 5 aus einem an den Ausdehnungskoeffizienten von Silizium angepassten Material und vorzugsweise aus einer Eisen-Nickel-Legierung (Invar®) oder Eisen-Nickel-Kobalt-Legierung (Kovar®) hergestellt. Wie zu erkennen ist, steht der Druckaufnehmer 10 mit einem in dem Trägerteil 5 angeordneten ersten Druckkanalabschnitt 51 in Verbindung, so dass die Sensormembran über den ersten Druckkanalabschnitt 51 mit Druck beaufschlagbar ist.

Wie weiter in Fig. 1 zu erkennen ist, wird das sockelartige Trägerteil 5 mit seiner von dem Druckaufnehmer 10 abgewandten Seite mit einem metallischen Anschlussstutzen 4 aus beispielsweise Edelstahl z.B. durch Laserschweißen verbunden. Der Anschlussstutzen 4 ist als Schraubanschluss ausgebildet und wird als separates Bauteil auf die Außenseite 32 eines metallischen ersten Sensorgehäuseteils 3 aufgeschweißt, wobei der Anschlussstutzen 4 eine zentrale Durchgangsöffnung 31 in dem ersten Sensorgehäuseteil 3 überdeckt. Mit dem Anschlussstutzen 4 ist die Vorrichtung in einer mit einem Gegengewinde versehenen Einbauöffnung festlegbar. Das etwas zylinderförmig ausgebildete Trägerteil 5 weist einen kleineren Durchmesser als die Durchgangsöffnung 31 auf. An einer von dem Halbleiter-Druckaufnehmer 10 abgewandten Seite des Trägerteils 5 ist ein Stutzen 52 ausgebildet, in dem der ersten Druckkanalabschnitt 51 zentrisch eingelassen ist. Der Anschlussstutzen 4 weist an seiner der Durchgangsöffnung 31 zugewandten Seite einen umlaufenden Kragen 42 auf, der an dieser Seite um einen in dem Anschlussstutzen 4 angeordneten zweiten Druckkanalabschnitt 41 umlaufend angeordnet ist. Das Trägerteil 5 wird mit dem Stutzen 52 in den Kragen 42 eingeschoben und mit diesem verschweißt. Anschließend kann das Trägerteil 5 durch die Durchgangsöffnung 31 des ersten Sensorgehäuseteils 3 geschoben werden und der Anschlussstutzen mit der Außenseite 32 des ersten Sensorgehäuseteils 3 verschweißt werden. Im Betrieb erfolgt die Druckzuführung vom zweiten Druckkanalabschnitt 41 in den ersten Druckkanalabschnitt 51 und von dort zur Unterseite des Halbleiter-Druckaufnehmers 10.

Das erste Sensorgehäuseteil 3 ist als ein plattenförmiges Basisteil 37 mit einer ersten Fläche 33, einer dazu parallelen, dem Außenraum zugewandten zweiten Fläche 32 und einer zur Anlage eines Schraubwerkzeuges geeigneten und vorzugsweise als Sechskant ausgebildeten Umfangswand 34 ausgestaltet. Der Anschlussstutzen 4 steht von der zweiten Fläche 32 des Basisteils 37 nach außen ab. Ein in dem Ausführungsbeispiel von Fig. 1 als Stanzbiegeteil 6 ausgebildetes Verbindungsteil ist mit einem vorzugsweise kreisringförmigen Abschnitt 63 auf die von der Außenfläche 32 abgewandte Fläche 33 des ersten Sensorgehäuseteils 3 aufgelegt und im Bereich des kreisringförmigen Abschnitts 63 mit dem ersten Sensorgehäuseteil 3 verschweißt. Ein sich radial nach innen erstreckender Abschnitt des Verbindungsteils 6 bildet ein Podest 67 zur Auflage einer Leiterplatte 7, welche mit dem Druckaufnehmer 10 über nicht dargestellte Bonddrähte elektrisch leitend verbunden ist. Die mit den Leiterbahnen 72 und elektronischen Bauelementen versehene Oberseite der auf das Stanzbiegeteil aufgesetzten Leiterplatte ist in etwa in einer Ebene mit der Oberseite des Druckaufnehmers 10 angeordnet. Das Trägerteil 5, auf dem der Druckaufnehmer 10 angeordnet ist, durchgreift eine Öffnung 71 in der Leiterplatte und eine zentrische Öffnung 68 in dem Verbindungsteil 6, wie am besten in Fig. 2 zu erkennen ist. Das Verbindungsteil 6 kann aber auch ohne das Podest 67 mit einer im Durchmesser vergrößerten Öffnung 68 ausgebildet werden. In diesem Fall kann die Leiterplatte 7 beispielsweise unter Zwischenlage eines Distanzstücks auf die Innenfläche 33 des Sensorgehäuseteils 3 aufgesetzt werden.

Anschlussflächen 73 der Leiterplatten 7 sind über Kontaktfederelemente 9 mit elektrischen Anschlusselementen 8 verbunden, die in dem aus Kunststoff gebildeten zweiten Sensorgehäuseteil 2 angeordnet sind, welches auf das Stanzbiegeteil 6 aufgesetzt wird. Das zweite Sensorgehäuseteil 2 kann aber auch aus einem anderen Material, beispielsweise aus Metall gebildet werden. Die Anschlusselemente 8 sind dann von dem zweiten Sensorgehäuseteil 2 zu isolieren. Die Anschlusselemente 8 sind von dem elektrischen Anschluss 23 ins Innere des Sensorgehäuses 1 geführt.

Das als Stanzbiegeteil gefertigte Verbindungsteil 6 weist eine nutförmige Kontur 62 auf, in welche eine zylinderförmige Wand 22 des zweiten Sensorgehäuseteils 2 eingesetzt ist. Über ein Dichtklebung in der Kontur 62 wird das zweite Sensorgehäuseteil 2 gegen das Verbindungsteil 6 abgedichtet. Durch Bördelung des äußeren Randes des Verbindungsteils 6 um den umlaufenden Endabschnitt der Wand 22 wird das Verbindungsteil 6 an dem zweiten Sensorgehäuseteil 2 befestigt.

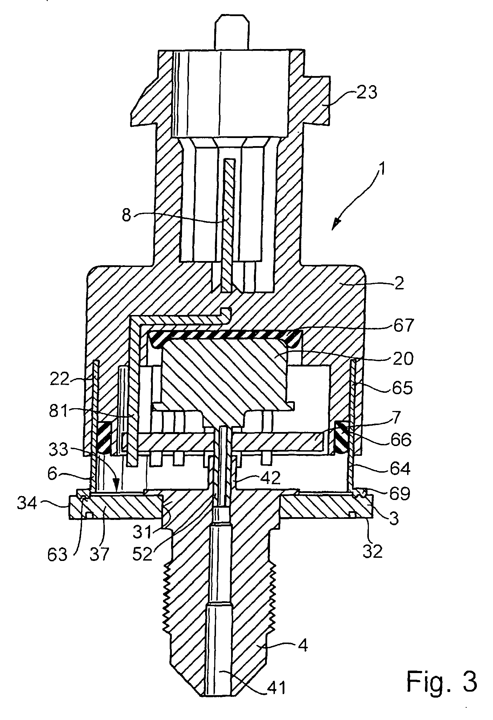

Ein Ausführungsbeispiel der Erfindung ist in Fig. 3 dargestellt. Bei diesem Ausführungsbeispiel ist der Druckaufnehmer 10 in einem Modulgehäuse 20 angeordnet, das auf eine Leiterplatte 7 aufgesetzt ist. Elektrische Kontaktelemente des Moduls sind mit Leiterbahnen der Leiterplatte 7 elektrisch verbunden, während ein Druckstutzen 52 des Moduls 20 durch eine Öffnung der Leiterplatte hindurchgeführt und in einen Kragen 42 des Anschlussstutzens 4 des Sensorgehäuses 1 eingesetzt ist und wie bei dem Drucksensorgehäuse aus Fig. 1 damit verschweißt ist. Der Anschlussstutzen 4 ist wieder an einem ersten Sensorgehäuseteil 3 angeordnet, welches als plattenförmiges Basisteil 37 mit einer ersten Fläche 33, einer dazu parallelen, dem Außenraum zugewandten zweiten Fläche 32 und einer zur Anlage eines Schraubwerkzeuges geeigneten und vorzugsweise als Sechskant ausgebildeten Umfangswand 34 ausgestaltet ist. Das zweite Sensorgehäuseteil 2 ist in diesem Ausführungsbeispiel als Spritzgussteil aus Kunststoff gefertigt. Das Verbindungsteil wird durch eine rohrförmige Metallhülse 64 gebildet, die als Einlegeteil in das Spritzgusswerkzeug eingelegt wird. Das Verbindungsteil 6 ist mit einem Abschnitt 65 in einer Nut 22 des zweiten Sensorgehäuseteil 2 festgelegt und steht mit einem weiteren Abschnitt 69 davon ab. Eine Dichtklebung 66 oder ein Dichtring kann den Verbindungsbereich von Verbindungsteil 6 und erstem Sensorgehäuseteil 2 abdichten, falls dies wünschenswert ist, um eine Abdichtung des Sensorgehäuses vom umgebenden Außenraum zu realisieren. Der äußere Rand des Verbindungsteils 6 ist flanschartig umgebogen, wodurch eine kreisringförmige Fläche 63 zur Auflage auf das erste Sensorgehäuseteil 3 gebildet wird. Das Verbindungsteil 6 wird im Bereich der Fläche 63 mit dem ersten Sensorgehäuseteil 3 verschweißt. Die elektrischen Anschlusselemente 8 sind durch das zweite Sensorgehäuseteil 2 in den Innenraum des Sensorgehäuses 1 geführt und mit der Leiterplatte 7 elektrischen verbunden. Ein Kleber 67 verbindet das Deckelteil 61 des Drucksensormoduls 20 mit der Innenseite des zweiten Sensorgehäuseteils 2.

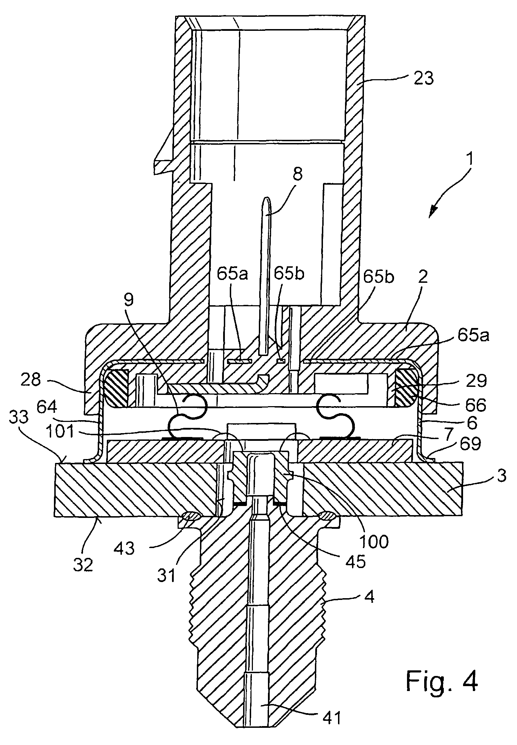

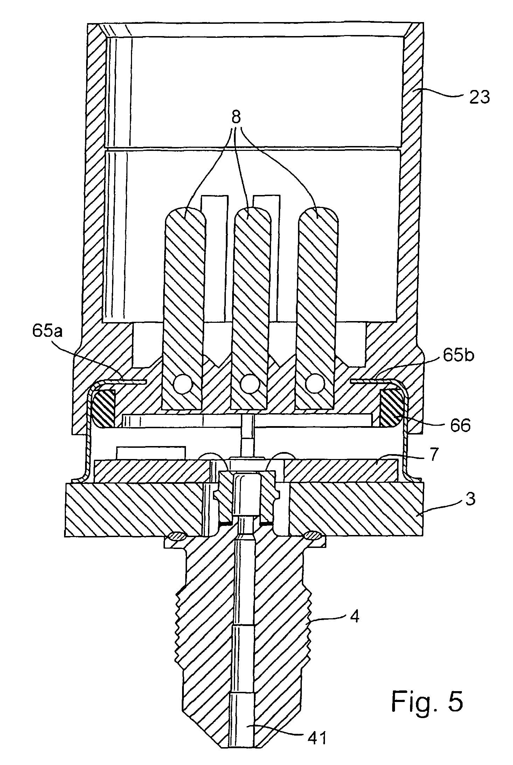

Fig. 4 und Fig. 5 zeigen ein weiteres Ausführungsbeispiel der Erfindung. Als Druckaufnehmer dient in diesem Ausführungsbeispiel eine Druckmesszelle 100 aus Edelstahl, die auf ihrer von dem Druckkanal 41 abgewandten Seite beispielsweise mit in Dünnschichttechnik hergestellten Widerständen versehen ist, die eine Wheatstonebrücke bilden. Die Aufbereitung und Verstärkung des Signals der Wheatstonebrücke erfolgt beispielsweise über einen ASIC, der auf einer in das Sensorgehäuse eingesetzten Leiterplatte 7 oder einem Hybrid angeordnet ist. Die tassenförmige Druckmesszelle 100 ist mit einem ein Gewinde aufweisenden Anschlussstutzen 4 verschweißt, was beispielsweise durch Laserschweißen, Widerstandschweißen oder Elektronenstrahlschweißen oder in anderer Weise erfolgen kann. Zu diesem Zweck wird die Druckmesszelle 100 mit ihrer offenen Seite auf einen Kragen des Anschlussstutzens 4 aufgesetzt und im Verbindungsbereich 45 mit diesem verschweißt. Die aus Anschlussstutzen 4 und Druckmesszelle 100 bestehende Baugruppe wird anschließend in die Durchgangsöffnung Öffnung 31 eines Sensorgehäuseteils 3 eingesetzt, das wie in dem anderen Ausführungsbeispiel als plattenförmiges Basisteil ausgebildet ist. Im Bereich 43 wird der Anschlussstutzen mit dem Sensorgehäuseteil 3 verschweißt. Auf die von dem Anschlussstutzen abgewandte Seite 33 des ersten Sensorgehäuseteils 3 ist eine Leiterplatte 7 mittels Leitkleber aufgeklebt, der einen elektrischen Masseanschluss zum Gehäuse des Drucksensors bildet. Die Leiterplatte 7 ist mit einem IC in Flip-Chip-Montage und verschiedenen anderen elektronischen Bauelementen bestückt. Kontaktfedern 9 verbinden die Leiterplatte mit Anschlusselementen 8, die in einem zweiten Sensorgehäuseteil 2 angeordnet sind und sich von einem Anschlussstecker 23 ins Innere des Sensorgehäuses erstrecken. Über Bonddrähte 101 ist die Druckmesszelle mit der Leiterplatte 7 verbunden.

Das zweite Sensorgehäuseteil 2 ist als Spritzgussteil gefertigt mit darin eingespritzten Anschlusselementen 8 und mit einem darin eingespritzten Verbindungsteil 6. Das Verbindungsteil 6 ist als Tiefziehteil ausgebildet und weist hier eine in etwa topfförmige Gestalt mit einem zylindrischen Außenmantel 64 und einem Boden 65a auf, der vollständig in den Kunststoff eingebettet ist. Das Verbindungsteil 6 kann sehr dünnwandig ausgebildet werden. Durch Ausnehmungen 65b in dem Boden 65 des Verbindungsteils sind die Anschlusselemente 8 und gegebenenfalls noch Durchgangsausnehmungen vom Gehäuseinnenraum bis zum Anschluss 23 des Sensors geführt. Durch die topfförmige Gestalt des Verbindungsteils 6 wird ein sehr guter EMV-Schutz (EMV = elektromagnetische Verträglichkeit) der Auswerteelektronik auf der Leiterplatte 7 erreicht. Da die Anschlusselemente 8 durch kleine Öffnungen 65a des Verbindungsteils 6 nach außen geführt sind, bildet das Verbindungsteil 6 zusammen mit dem plattenförmigen ersten Sensorgehäuseteil 3 einen nahezu geschlossenen EMV-Raum. Eine umlaufende Kleberraupe 66 aus dichtendem Klebermaterial ist auf der Innenseite des Sensorgehäuses zwischen dem Verbindungsteil 6 und einem ringförmigen Wand 29 des zweiten Sensorgehäuseteil 2 eingesetzt. Es ist auch möglich die Kleberraupe auf der Außenseite des Verbindungsteils vorzusehen oder einen O-Ring zwischen der Außenwand 6 und dem Außenumfang des zweiten Sensorgehäuseteils mit einzuspritzen. Der von dem zweiten Sensorgehäuseteil 2 abgewandte Rand des Verbindungsteils ist nach außen abgebogen und bildet einen umlaufenden Kragen 69, der mit der Seite 33 des ersten Sensorgehäuseteils verschweißt ist, was vorteilhaft durch Laserschweißen oder Widerstandsschweißen erfolgen kann, so dass eine temperaturstabile, feste Verbindung entsteht.

Das in Fig. 4 und 5 dargestellte Ausführungsbeispiel ermöglicht vorteilhaft eine Reduktion der Sensorbauhöhe in Verbindung mit einer Vereinfachung des gesamten Aufbaukonzepts und eine deutliche Verbesserung der EMV-Abschirmung.

Die dargestellten Drucksensoren sind beispielsweise zur Verwendung in Fahrzeuggetrieben, Kraftstoffdirekteinspritzung oder als Drucksensoren in einem Common-Rail System verwendbar.

## Patentansprüche

1. Vorrichtung zur Druckmessung, insbesondere zur Hochdruckmessung, mit einem in einem Sensorgehäuse (1) angeordneten Druckaufnehmer (10), wobei das Sensorgehäuse (1) ein mit einem Druckanschlussstutzen (4) versehenes erstes Sensorgehäuseteil (3) und ein mit einem elektrischen Anschluss (23) versehenes zweites Sensorgehäuseteil (2) aufweist, wobei das zweite Sensorgehäuseteil (2) als Spritzgussteil aus Kunststoff gefertigt ist und mittels eines zwischen dem ersten Sensorgehäuseteil (3) und dem zweiten Sensorgehäuseteil (2) angeordneten Verbindungsteils (6) an dem ersten Sensorgehäuseteil (2) befestigt ist und wobei das Verbindungsteil mit einem zur Verbindung mit dem ersten Sensorgehäuseteil (3) vorgesehenen Abschnitt (69) von dem zweiten Sensorgehäuseteil (2) absteht, **dadurch gekennzeichnet, dass** das Verbindungsteil (6) mit einem in den Kunststoff des zweiten Sensorgehäuseteils (2) eingespritzten Abschnitt (65) an dem zweiten Sensorgehäuseteil festgelegt ist.

2. Vorrichtung nach Anspruch 1, **dadurch gekennzeichnet, dass** das Verbindungsteil (3) ein Stanzbiegeteil, Tiefziehteil oder dünnwandiges Rohrteil ist.

3. Vorrichtung nach Anspruch 1, **dadurch gekennzeichnet, dass** das erste Sensorgehäuseteil (3) ein plattenförmiges Basisteil (37) aufweist mit einer ersten Fläche (33), einer dazu parallelen zweiten Fläche (32) und einer zur Anlage eines Schraubwerkzeuges geeigneten und vorzugsweise als Sechskant ausgebildeten Umfangswand (34), wobei der Anschlussstutzen (4) von der zweiten Fläche (32) abstehend an dem Basisteil (37) angeordnet ist.

4. Vorrichtung nach einem der Ansprüche 1 bis 3, **dadurch gekennzeichnet, dass** ein umlaufender, vorzugsweise kreisringförmiger Abschnitt (63) des Verbindungsteils (6) mit einer Fläche (33) des ersten Sensorgehäuseteils (3) verschweißt ist.

5. Vorrichtung nach einem der Ansprüche 1 bis 4, **dadurch gekennzeichnet, dass** das Verbindungsteil (6) mittels einer Bördelung an dem zweiten Sensorgehäuseteil festgelegt ist. (Fig. 1)

6. Vorrichtung nach Anspruch 5, **dadurch gekennzeichnet, dass** an dem Verbindungsteil (6) eine umlaufende Nut (62) ausgebildet ist, in welche die Stirnseite einer umlaufenden Gehäusewand (22) des zweiten Sensorgehäuseteils (2) eingreift.

7. Vorrichtung nach einem der vorstehenden Ansprüche, **dadurch gekennzeichnet, dass** zwischen dem zweiten Sensorgehäuseteil (2) und dem Verbindungsteil (6) eine umlaufende Dichtklebung (66) oder eine Dichtung angeordnet ist.

8. Vorrichtung nach einem der vorstehenden Ansprüche, **dadurch gekennzeichnet, dass** der Druckaufnehmer durch eine mit dem Anschlussstutzen (4) verschweißte Druckmesszelle (100) gebildet wird, die über Bondrähte mit einer auf dem ersten Sensorgehäuseteil (3) angeordneten Leiterplatte (7) elektrisch verbunden ist, wobei die Druckmesszelle (100) zumindest teilweise in einer Durchgangsöffnung (31) des ersten Sensorgehäuseteils (3) angeordnet ist.

9. Vorrichtung nach einem der vorstehenden Ansprüche, **dadurch gekennzeichnet, dass** das Verbindungsteil (6) mit dem ersten Sensorgehäuseteil (3) einen bis auf Öffnungen (65b) geschlossenen EMV-Raum bilden, wobei elektrische Anschlusselemente (8) durch die Öffnungen (65b) nach außen geführt sind.

## Claims

1. Apparatus for measuring pressure, in particular for measuring high pressure, with a pressure pick-up (10) which is arranged in a sensor housing (1), the sensor housing (1) having a first sensor housing part (3), which is provided with a pressure connection piece (4), and a second sensor housing part (2), which is provided with an electrical connection (23), the second sensor housing part (2) being produced as a plastic injection-moulded part and being attached to the first sensor housing part (2) by means of a connecting part (6) which is arranged between the first sensor housing part (3) and the second sensor housing part (2), and a section (69) of the connecting part being provided for the purpose of connection to the first sensor housing part (3) and protruding from the second sensor housing part (2), **characterized in that** a section (65) of the connecting part (6) is injection-moulded into the plastic of the second sensor housing part (2) and is fixed to the second sensor housing part.

2. Apparatus according to Claim 1, **characterized in that** the connecting part (6) is a bent stamped part, a deep-drawn part or a thin-walled tubular part.

3. Apparatus according to Claim 1, **characterized in that** the first sensor housing part (3) has a plate-like base part (37) with a first surface (33), a second surface (32) which is parallel to the said first surface, and a circumferential wall (34) to which a spanner can be applied and which is preferably hexagonal, the connection piece (4) being arranged on the base part (37) such that it protrudes from the second surface (32).

4. Apparatus according to one of Claims 1 to 3, **characterized in that** a circumferential, preferably annular, section (63) of the connecting part (6) is welded to one surface (33) of the first sensor housing part (3) .

5. Apparatus according to one of Claims 1 to 4, **characterized in that** the connecting part (6) is fixed to the second sensor housing part by means of a flanged edge. (Fig. 1)

6. Apparatus according to Claim 5, **characterized in that** a circumferential groove (62) is formed on the connecting part (6), and the end of a circumferential housing wall (22) of the second sensor housing part (2) engages in the said circumferential groove.

7. Apparatus according to one of the preceding claims, **characterized in that** a circumferential sealing adhesively bonded element (66) or a seal is arranged between the second sensor housing part (2) and the connecting part (6).

8. Apparatus according to one of the preceding claims, **characterized in that** the pressure pick-up is formed by a pressure pick-up cell (100) which is welded to the connection piece (4) and is electrically connected to a printed circuit board (7), which is arranged on the first sensor housing part (3), by means of bonding wires, at least part of the pressure pick-up cell (100) being arranged in a passage opening (31) in the first sensor housing part (3).

9. Apparatus according to one of the preceding claims, **characterized in that** the connecting part (6) and the first sensor housing part (3) form an EMC space which is closed apart from openings (65b), with electrical connection elements (8) being routed to the outside through the openings (65b).

## Revendications

1. Dispositif de mesure de pression, en particulier pour la mesure de hautes pressions, comprenant un capteur de pression (10) logé dans un boîtier de capteur (1) présentant une première partie de boîtier (3) pourvue d'un raccord à pression (4) et une deuxième partie de boîtier (2) pourvue d'une connexion électrique (23), la deuxième partie de boîtier (2) étant une pièce moulée par injection en matière plastique fixée à la première partie de boîtier (3) au moyen d'une pièce de liaison (6) disposée entre la première (3) et la deuxième partie de boîtier (2), la pièce de liaison dépassant de la deuxième partie de boîtier (2) avec un segment (69) prévu pour la liaison avec la première partie de boîtier (3),
**caractérisé en ce que**
la pièce de liaison (6) est fixée à la deuxième partie de boîtier avec un segment (65) moulé par injection dans la matière plastique de la deuxième partie de boîtier (2).

2. Dispositif selon la revendication 1,
**caractérisé en ce que**
la pièce de liaison (3) est une pièce pliée emboutie, une pièce extrudée ou une pièce tubulaire à paroi mince.

3. Dispositif selon la revendication 1,
**caractérisé en ce que**
la première partie de boîtier (3) présente une pièce de base en forme de plaque (37) avec une première surface (33), une deuxième surface (32) parallèle à celle-ci et une paroi périphérique (34) appropriée pour l'appui d'un outil de vissage, et de préférence configurée sous forme de six pans, le raccord (4) partant de la deuxième surface (32) sur la pièce de base (37).

4. Dispositif selon l'une des revendications 1 à 3,
**caractérisé en ce qu'**
un segment (63) périphérique, de préférence annulaire, de la pièce de liaison (6), est soudé avec une surface (33) de la première partie de boîtier (3).

5. Dispositif selon l'une des revendications 1 à 4,
**caractérisé en ce que**
la pièce de liaison (6) est fixée au moyen d'un rabattement des bords à la deuxième partie de boîtier (figure 1).

6. Dispositif selon la revendication 5,
**caractérisé en ce que**
la pièce de liaison (6) comporte une rainure périphérique (62) dans laquelle s'engage la face frontale d'une paroi de boîtier périphérique (22) de la deuxième partie de boîtier (2).

7. Dispositif selon l'une des revendications précédentes,
**caractérisé en ce qu'**
entre la deuxième partie de boîtier (2) et la pièce de liaison (6) est disposé un collage d'étanchéité périphérique (66) ou un joint d'étanchéité.

8. Dispositif selon l'une des revendications précédentes,
**caractérisé en ce que**
le capteur de pression est formé par une cellule de mesure de pression (100) soudée avec le raccord (4), qui est reliée de manière électro-conductrice par des fils de brasure avec une plaquette de circuit imprimé (7) disposée sur la première partie de boîtier (3), la cellule de mesure de pression (100) étant au moins partiellement disposée dans une ouverture traversante (31) de la première partie de boîtier (3).

9. Dispositif selon l'une des revendications précédentes,
**caractérisé en ce que**
la pièce de liaison (6) forme, avec la première partie de boîtier (3), un espace de compatibilité électromagnétique fermé à l'exception d'ouvertures (65b), avec des éléments de connexion électrique (8) guidés vers l'extérieur à travers les ouvertures (65b).
